# EUROPEAN PATENT SPECIFICATION

(11) **EP 2 185 818 B1**
(45) Date of publication and mention of the grant of the patent: **19.09.2012**
(21) Application number: 08829336.0
(22) Date of filing: 19.08.2008
(51) Int. Cl.: F04B 9/125, F01L 25/02

(54) **CONTROLVALVE**
STEUERUNGSVENTIL
SOUPAPE DE CONTRÔLE

(30) Priority: 05.09.2007 ZA 200708244
(43) Date of publication of application: 19.05.2010
(73) Proprietor: AEL MINING SERVICES LIMITED, Woodmead 2196 Sandton (ZA)
(72) Inventor: BUHRMANN, Rudolph, Teodor, 2196 Johannesburg (ZA); BUHRMANN, Rudolph, 2196 Johannesburg (ZA); NIEMANN, Franck, 2196 Johannesburg (ZA)
(74) Representative: Wood, Graham
(86) International application number: PCT/ZA2008/000074
(87) International publication number: WO 2009/033193

(56) References cited:
- DE-A1- 3 803 988
- FR-A- 2 821 128
- US-A- 3 620 126
- US-B1- 6 431 046

## Description

### BACKGROUND OF THE INVENTION

This invention relates to a control valve which is particularly suited for controlling the pumping of an emulsion in the mixing of a liquid explosive. In this respect use is made of a pump which has a piston which is mounted inside a cylinder which, in response to a directional control valve, is alternately pressurised by a pressurised fluid on opposing sides. This causes the piston to move with a reciprocating action inside the cylinder. It is important, in this type of operation, to ensure that the piston moves fully in a first direction to a first limiting position and thereafter in a second direction to a second limiting position. The piston should not move to an intermediate position. To achieve this positive signals are required from the control valve. This in turn implies that the control valve must, itself, be moved positively between limiting positions to ensure that definite signals are given to the pumping arrangement.

An example of this type of pump is described in the applicant's pending application ZA2006/9692 filed 21 November 2006. Patent document FR2821128 discloses a directional control valve which includes a piston but does not disclose the provision of the positive movement of the same.

A further factor is that the control valve should be tolerant to foreign material in the pressurised fluid which is delivered to the pumping arrangement. Also it should be possible to fabricate the control valve from components which are readily manufactured, for example by means of a conventional plastic injection moulding system which produces components with tolerances which will not interfere with the accuracy and precise functioning of the control valve.

### SUMMARY OF INVENTION

To achieve the aforementioned objectives the invention provides a control valve which includes a housing, a chamber in the housing, a valve stem in the chamber, a piston which is fixed to the valve stem, first and second valve members which are spaced apart and which are slidingly mounted to the valve stem and which are sealingly engageable with first and second valve seats respectively, a biasing member which acts between the first and second valve members and which tends to bias the first and second valve members apart, a third valve member which is fixed to the valve stem and which is positioned between third and fourth valve seats, first, second, third, fourth, fifth, sixth and seventh port connections to the housing, the first port connection being connected, in use, to a source of pressurised fluid to introduce the pressurised fluid into a first volume in the chamber which is at least partly bounded by the first and second valve members, the second and third port connections being connected to the source of pressurised fluid for introducing pressurised fluid, in a controlled way, into second and third volumes inside the chamber on opposing respective sides of the piston, and wherein, when the second volume is pressurised, the piston, the valve stem and the third valve member are displaced in a first direction inside the chamber and the first valve member is sealingly disengaged from the first valve seat to allowed pressurised fluid from the first port connection to flow to the fourth port connection and to allow pressurised fluid from the fifth port connection to flow to the sixth port connection which, in turn, is connected to atmosphere, the second valve member remaining sealingly engaged with the second valve seat thereby to seal the first port connection from the fifth port connection and, when the second volume is pressurised, the piston, valve stem and third valve member are displaced in a second direction inside the chamber which is opposite to the first direction and the first valve member is sealingly re-engaged with the first valve seat thereby to seal the first port connection from the fourth port connection, the second valve member is sealingly disengaged from the second valve seat thereby to allow pressurised fluid from the first port connection to flow to the fifth port connection, the third valve member is sealingly re-engaged with the fourth valve seat thereby to seal the fifth port connection from the sixth port connection and the third valve member is sealingly disengaged from the third valve seat thereby to connect the seventh port, which is linked to the fourth port, to the sixth port and hence to atmosphere.

### BRIEF DESCRIPTION OF THE DRAWINGS

The invention is further described by way of example with reference to the accompanying drawings in which:
Figure 1 is a side view in section of a control valve according to the invention;
Figure 2 is a perspective view on an enlarged scale of components of the control valve in an exploded configuration;
Figure 3 is a perspective view of the components shown in Figure 2 assembled, but outside of a housing;
Figure 4 schematically shows a piston and cylinder pumping arrangement; and
Figure 5 is a side view in section of a second form of the control valve.

### DESCRIPTION OF PREFERRED EMBODIMENT

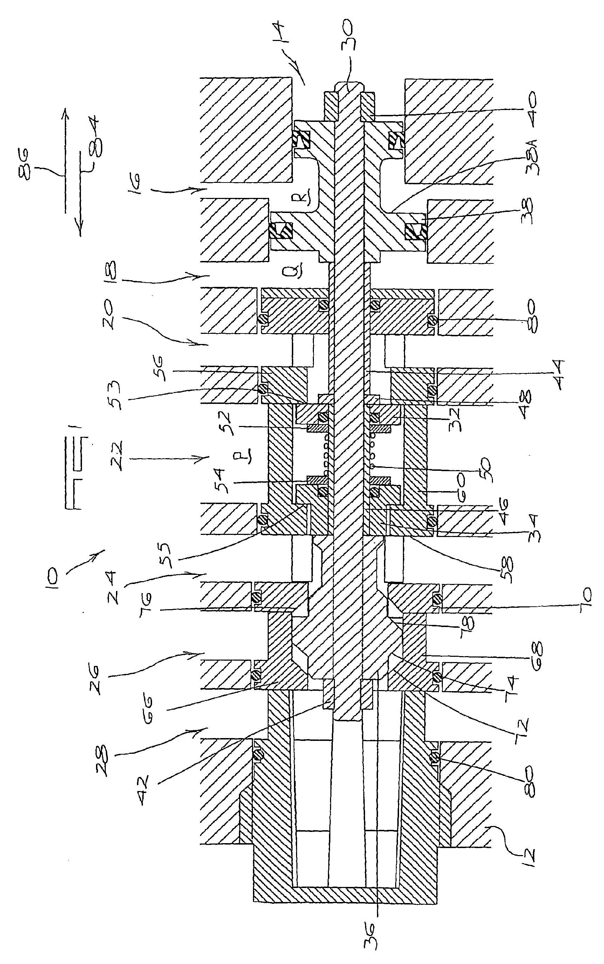

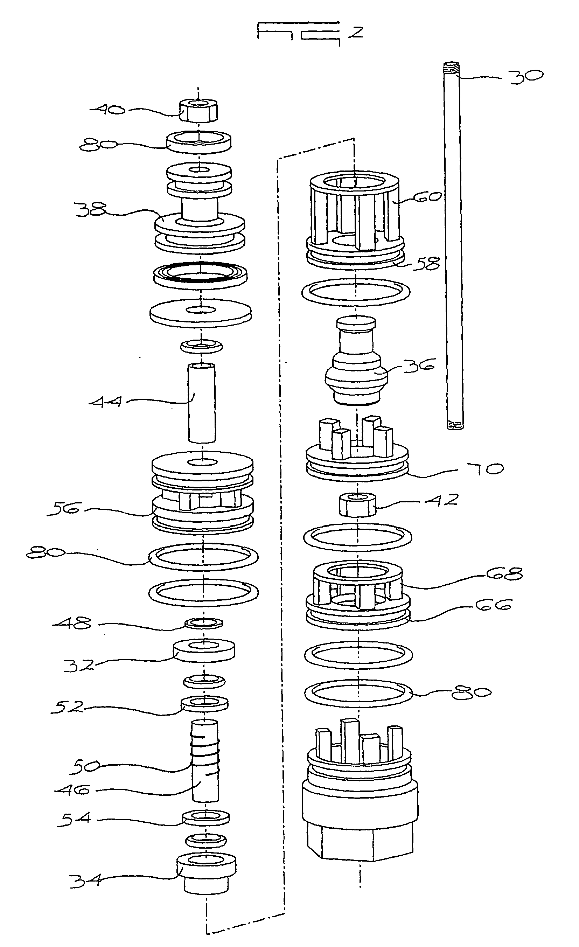

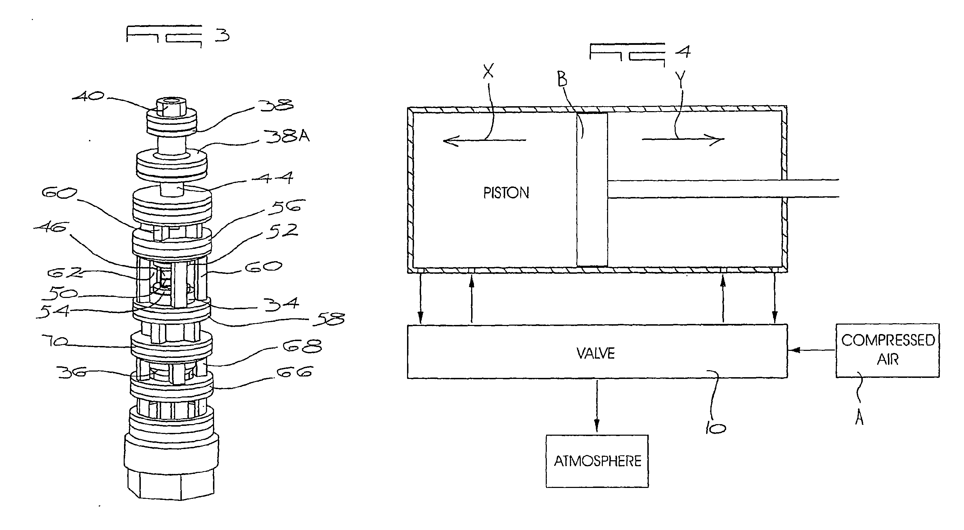

Figure 1 illustrates a control valve 10 according to the invention in an assembled configuration, Figures 2 and 3 show components of the valve in an exploded configuration and in an assembled arrangement, respectively, but outside a valve housing.

The control valve includes a housing 12 which is shown only in part. It is to be understood in this connection that aspects and constructional details of the control valve which are not required for an understanding of the operation of the valve have been omitted in order to simplify the drawings.

A chamber 14 is defined inside the housing and first, second, third, fourth, fifth, sixth and seventh port connections 16 to 28 respectively are formed in the housing to the chamber.

As has been explained in the preamble to the specification the control valve is intended for use with a pumping arrangement which is actuated by means of a pressurised fluid e.g. compressed air. For this particular application, which is not limiting, it is assumed that the pumping arrangement shown schematically only in Figure 4 includes a cylinder A in which is mounted a reciprocating piston B. The third port connection 20 is connected to a first side of the piston so that when pressurised air from a source C is applied to this side the piston is moved in one direction indicated by an arrow X. The seventh port connection 28 is also connected to the first side of the piston. The fifth port connection 24 is connected to a second, opposing side of the piston so that when pressurised fluid is applied to this side of the piston the piston is caused to move in an opposing direction indicated by an arrow Y. The sixth port connection 26 is connected to atmosphere.

A connecting rod or stem 30 is positioned inside the housing and the various components which are shown in an exploded configuration in Figure 2 are fixed to the stem, see Figure 3. These include first and second valve members 32 and 34 respectively, a third valve member 36 and a piston 38. The piston and the third valve member are fixed to the valve stem in an immovable manner and are flanked by respective retaining nuts 40 and 42 which are threadedly engaged with projecting threaded ends of the stem.

Two sleeves 44 and 46 are slidingly engaged with the stem. The sleeves are separated by means of a washer 48. A spring 50 which surrounds the sleeve 46 acts between washers 52 and 54 which in turn bear against the first and second valve members 32 and 34. The spring acts to bias the valve members apart so that the first valve member is seated on a first valve seat 53 and the second valve member is seated on a second valve seat 55.

The valve members in turn are flanked by relatively large components 56 and 58 respectively which are formed with spaced rods 60 so that fluid can flow in a radial direction through the components through apertures 62 formed between the rods.

The third valve member is partly located inside a shaped component 66 which is also formed with a plurality of spaced rods 68 to allow radial fluid flow through the component. To its right side, in Figure 1, the third valve member is partly located inside a component 70. The component 66 has a third valve seat 72 on an inner surface which opposes a complementary formation 74 on the third valve member. The component 70 is similarly formed in that it has a fourth valve seat 76 which opposes a complementary formation 78 on the valve member 36.

Various seals, collectively designated with the reference numeral 80, are provided on moving surfaces and at interfaces between other components which are to be sealed, in a manner which is known in the art. This aspect is therefore not further described in this specification.

Figure 3 shows the components in Figure 2 fully assembled but outside of the chamber 14.

The first and second valve members 32 and 34 partly enclose a first volume P, while second and third volumes Q and R are on opposing sides of the piston 38.

Assume that a source of pressurised fluid e.g. compressed air is connected to the first port connection 16 and to the fourth port connection 22. Volume R is then pressurised and the piston 38 is then pressurised on a right face designated 38A. The piston is fixed to the stem and the stem is therefore displaced, together with the piston in a first direction 84 i.e. to the left in the drawing. The third valve member 36 which is fixed to the stem is also displaced to the left.

The washer 52 acts against the first valve member and is moved to the left because of the sleeve 44 which is positioned between the washer and the piston. The first valve member is then displaced from the first valve seat 53 and pressurised fluid can then flow from the volume P to the third port connection 20. The piston B in the pumping arrangement referred to in Figure 4 is then pressurised to move in direction X. At the same time it is to be noted that the second valve member 34 is kept in sealing engagement with its valve seat 55. Pressurised fluid cannot flow from the first port connection 16 to the fifth port connection 24. However the third valve member which is displaced to the left is moved away from the fourth valve seat 76 and pressurised fluid on the second side of the piston B flows from the fifth port connection 24 to the sixth port connection 26 which is connected to atmosphere. A seal is established at this time between the complementary formation 74 of the third valve member and the third valve seat 72 which seals the seventh port connection 28 from the sixth port connection 26.

If pressurised fluid is introduced via the second port connection 18 into the volume Q on the left side of the piston 38 then the piston is displaced in a second direction 86 i.e. to the right in Figure 1. The stem and the third member are moved together with the piston in the second direction. The third valve member pushes against the second valve member which is then displaced from the valve seat 55. The first valve member is kept engaged with the valve seat 53. This relative movement between the valve members 32 and 34 is allowed for by virtue of the fact that they are slidingly mounted to the sleeve 46 and are biased apart by the spring 50.

Thus, due to the sealing action of the first valve member, compressed air is no longer supplied from the fourth port connection to the third port connection. Compressed air does however flow from the fourth port connection via the opening between the second valve member and the second valve seat 55 to the fifth port connection 24 and the piston B is pressurised on the second side and so is caused to move in direction Y. The complementary formation 78 of the third valve member remains sealingly engaged with the fourth valve seat 76 and the fifth port connection 24 is sealed from the sixth port connection 26. However the third valve member is sealingly disengaged from the third valve seat 72 and the seventh port connection 28, which is coupled to the first side of piston B, is then connected via the sixth port connection to atmosphere and the pressurised air on the first side of the piston can discharge to atmosphere.

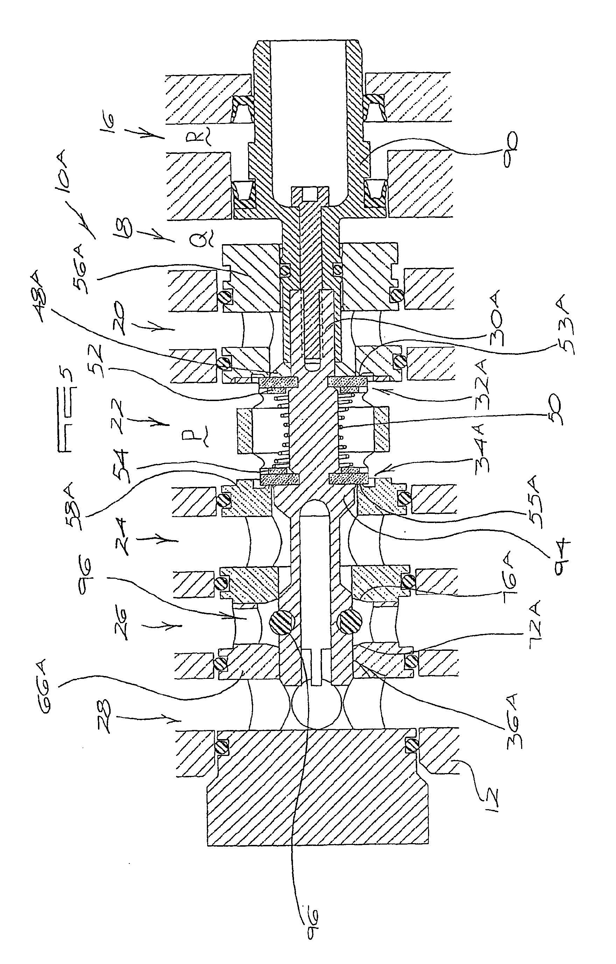

Figure 5 shows a modified form 10A of a control valve according to the invention. Components shown in Figure 5 which are similar to components already described bear like reference numerals and are not further described herein.

The control valve 10A has fewer components than the control valve 10 and includes first and second valve members 32A and 34A which are attached to a stem 30A which has at one end a valve member 36A which is integrally formed with the stem. At an opposing end the stem is secured to a piston 90 using a conventional bolt of a predetermined length. A spring 50 which surrounds the stem 30A acts between washers 52 and 54 which in turn bear against the first and second valve members 32A and 34A. The spring acts to bias the valve members apart so that the first valve member is seated on a first valve seat 53A and the second valve member is seated on a second valve seat 55A.

The valve members 32A and 34A in turn are flanked by relatively large components 56A and 58A respectively and are positioned inside the component 58A which includes spaced apertures 92 to allow fluid to flow radially through the component. The valve members are manufactured from a resilient material of a kind known in the art. This allows the valves to be stretched over the stem. The spring 50 biases the valve members through the respective washers 52 and 54 into sealing engagement at one end with a washer 48A, which is positioned on the stem 30A between the piston 90 and the first valve member, and at an opposing end with a shoulder 94 of the stem.

The third valve member 36A is located inside a shaped component 66A which is formed with a plurality of spaced apertures 94 to allow radial fluid to flow through the component. The component 66A has a third valve seat 76A and a fourth valve seat 72A on respective opposing inner surfaces of the component. The third valve member 36A includes an O-ring 96 which is brought into sealing engagement with a respective valve seat inside the component 66A through the movement of the stem 30A.

The first and second valve members 32A and 34A enclose a first volume P, while second and third volumes Q and R are on opposing sides of the piston 90.

The control valve 10A functions in a substantially similar way as the control valve 10. When a source of pressurised fluid is connected to a first port 16 the volume R is pressurised and the piston 90 is moved in a first direction 84 which causes the first valve member 32A to be disengaged from the first valve seat 53A. Pressurised fluid can then flow from the volume P, i.e. the fourth port 22, to the third port connection 20. The biasing action of the spring 50 keeps the second valve member 34A in sealing engagement with its valve seat 55A which prevents pressurised fluid flowing to the fifth port 24. Movement of the piston in the first direction 84 also causes the O-ring 96 of the third valve 36A to engage sealingly with the fourth valve seat 72A. Pressurised fluid can now flow from the fifth port connection 24 to the sixth port connection 26.

When a pressurised source of fluid is connected to the volume Q via the second connecting port 18, the piston 90 is moved in a second direction 86 which in turn causes the stem 30A to move to the right. As a result the first valve member 32A is brought into sealing engagement with its valve seat 53A and the seal between the second valve member 34A and its valve seat 55A is broken. At the same time the O-ring 96 is brought into sealing engagement with the third valve seat 76A. With the control valve 10A in this configuration pressurised fluid can flow from the fourth port connection 22 to the fifth port connection 24 and pressurised fluid from the seventh port connection 28 can flow to atmosphere via the sixth port connection 26.

The control valve is operative to give a precise directional control function to a pumping arrangement. The first and second valve members 32 and 34 are constantly biased apart by the spring 50 under conditions which ensure that it is not possible for both valve members to be displaced from their respective valve seats at the same time. This ensures that the switching function of the control valve is precise. This aspect is, in use, accurately reflected in precisely controlled pumping strokes of the pumping arrangement.

## Claims

1. A control valve (10;10A) which includes a housing (12), a chamber (14) in the housing, a valve stem (30; 30A) in the chamber, a piston (38;90) which is fixed to the valve stem, first and second valve members (32; 34; 32A,34A) which are spaced apart and which are slidingly mounted to the valve stem and which are sealingly engageable with first and second valve seats respectively (53,55; 53A,55A), a biasing member (50) which acts between the first and second valve members and which tends to bias the first and second valve members apart, a third valve member (36; 36A) which is fixed to the valve stem and which is positioned between third and fourth valve seats (72,76; 72A,76A), first, second, third, fourth, fifth, sixth and seventh port connections (16, 18, 20,22, 24, 26, 28) to the housing, the fourth port connection(22) being connected, in use, to a source of pressurised fluid to introduce the pressurised fluid into a first volume (P) in the chamber which is at least partly bounded by the first and second valve members, the first (16) and second (18) port connections being connected to the source of pressurised fluid for introducing pressurised fluid, in a controlled way, into second and third volumes (Q,R) inside the chamber on opposing respective sides of the piston, and wherein, when the third volume (R) is pressurised, the piston (38;90), the valve stem (30;30A) and the third valve member (36;36A) are displaced in a first direction inside the chamber and the first valve member (32;32A) is sealingly disengaged from the first valve seat (53;53A) to allow pressurised fluid from the fourth port connection (22) to flow to the third port connection (20) and to allow pressurised fluid from the fifth port connection to flow to the sixth port connection which, in turn, is connected to atmosphere, the second valve member (34;34A) remaining sealingly engaged with the second valve seat (55;55A) thereby to seal the fourth port connection (22) from the fifth port connection (24) and, when the second volume (Q) is pressurised, the piston (38;90), valve stem (30;30A) and third valve member (36;36A) are displaced in a second direction inside the chamber (14) which is opposite to the first direction and the first valve member (32;32A) is sealingly re-engaged with the first valve seat (53;53A) thereby to seal the third port connection (20) from the fourth port connection (22), the second valve member (34;34A) is sealingly disengaged from the second valve seat (55;55A) thereby to allow pressurised fluid from the first port connection to flow to the fifth port connection, the third valve member (36;36A) is sealingly re-engaged with the fourth valve seat (76;76A) thereby to seal the fifth port connection from the sixth port connection (26) and the third valve member (36;36A) is sealingly disengaged from the third valve seat (72;72A) thereby to connect the seventh port, which is linked to the third port, to the sixth port and hence to atmosphere.

2. A pumping arrangement which includes a cylinder (A), a reciprocating piston (B) inside the cylinder, a control valve (10;10A) according to claim 1 , and a compressed air source which is connected to the first port connection (16) and to the fourth port connection (22), wherein the third port connection (20) and the seventh port connection (28) are connected to a first side of the piston so that when pressurised air from the source is applied to the first side the piston is moved in a first direction, the fifth port connection (24) is connected to a second, opposing side of the piston so that when pressurised air is applied to the second side the piston is caused to move in a second direction which opposes the first direction, and the sixth port connection (26) is connected to atmosphere.

## Patentansprüche

1. Steuerventil (10; 10A), das Folgendes beinhaltet: ein Gehäuse (12), eine Kammer (14) in dem Gehäuse, einen Ventilschaft (30; 30A) in der Kammer, einen Kolben (38; 90), der an dem Ventilschaft befestigt ist, ein erstes und ein zweites Ventilelement (32; 34; 32A, 34A), die voneinander beabstandet sind und gleitfähig an dem Ventilschaft montiert sind und die dichtend mit einem ersten bzw. zweiten Ventilsitz (53, 55; 53A, 55A) in Eingriff gebracht werden können, ein Vorspannelement (50), das zwischen dem ersten und dem zweiten Ventilelement wirkt und das dazu neigt, das erste und das zweite Ventilelement auseinander zu drücken, ein drittes Ventilelement (36; 36A), das an dem Ventilschaft befestigt ist und das zwischen einem dritten und einem vierten Ventilsitz (72, 76; 72A, 76A) positioniert ist, eine erste, zweite, dritte, vierte, fünfte, sechste und siebte Ventilöffnungsverbindung (16, 18, 20, 22, 24, 26, 28) zu dem Gehäuse, wobei die vierte Ventilöffnungsverbindung (22) im Gebrauch mit einer Quelle von druckbeaufschlagtem Fluid verbunden ist, um das druckbeaufschlagte Fluid in ein erstes Volumen (P) in der Kammer einzuführen, das wenigstens teilweise von dem ersten und dem zweiten Ventilelement begrenzt wird, wobei die erste (16) und die zweite (18) Ventilöffnungsverbindung mit der Quelle von druckbeaufschlagtem Fluid zum kontrollierten Einführen von druckbeaufschlagtem Fluid in ein zweites und ein drittes Volumen (Q, R) im Inneren der Kammer auf entgegengesetzten jeweiligen Seiten des Kolbens verbunden ist, und wobei, wenn das dritte Volumen (R) druckbeaufschlagt ist, der Kolben (38; 90), der Ventilschaft (30; 30A) und das dritte Ventilelement (36; 36A) in einer ersten Richtung im Inneren der Kammer verlagert werden und das erste Ventilelement (32; 32A) dichtend außer Eingriff mit dem ersten Ventilsitz (53; 53A) gebracht wird, um druckbeaufschlagtes Fluid von der vierten Ventilöffnungsverbindung (22) zu der dritten Ventilöffnungsverbindung (20) strömen zu lassen und druckbeaufschlagtes Fluid von der fünften Ventilöffnungsverbindung zu der sechsten Ventilöffnungsverbindung strömen zu lassen, die wiederum mit der Atmosphäre verbunden ist, wobei das zweite Ventilelement (34; 34A) dichtend mit dem zweiten Ventilsitz (55; 5A) in Eingriff bleibt, um dadurch die vierte Ventilöffnungsverbindung (22) von der fünften Ventilöffnungsverbindung (24) abzudichten, und, wenn das zweite Volumen (Q) druckbeaufschlagt ist, der Kolben (38; 90), der Ventilschaft (30; 30A) und das dritte Ventilelement (36; 36A) in einer zweiten Richtung im Inneren der Kammer (14) verlagert werden, die der ersten Richtung entgegengesetzt ist, und das erste Ventilelement (32; 32A) erneut dichtend mit dem ersten Ventilsitz (53; 53A) in Eingriff gebracht wird, um dadurch die dritte Ventilöffnungsverbindung (20) von der vierten Ventilöffnungsverbindung (22) abzudichten, das zweite Ventilelement (34; 34A) dichtend außer Eingriff mit dem zweiten Ventilsitz (55; 55A) gebracht wird, um dadurch druckbeaufschlagtes Fluid von der ersten Ventilöffnungsverbindung zur fünften Ventilöffnungsverbindung strömen zu lassen, das dritte Ventilelement (36; 36A) erneut dichtend mit dem vierten Ventilsitz (76; 76A) in Eingriff gebracht wird, um dadurch die fünfte Ventilöffnungsverbindung von der sechsten Ventilöffnungsverbindung (26) abzudichten, und das dritte Ventilelement (36; 36A) dichtend außer Eingriff mit dem dritten Ventilsitz (72; 72A) gebracht wird, um dadurch die siebte Ventilöffnung, die mit der dritten Ventilöffnung verbunden ist, mit der sechsten Ventilöffnung und somit der Atmosphäre zu verbinden.

2. Pumpanordnung, die einen Zylinder (A), einen hin- und hergehenden Kolben (B) im Inneren des Zylinders, ein Steuerventil (10; 10A) nach Anspruch 1 und eine Druckluftquelle beinhaltet, die mit der ersten Ventilöffnungsverbindung (16) und der vierten Ventilöffnungsverbindung (22) verbunden ist, wobei die dritte Ventilöffnungsverbindung (20) und die siebte Ventilöffnungsverbindung (28) mit einer ersten Seite des Kolbens verbunden sind, so dass, wenn Druckluft von der Quelle an die erste Seite angelegt wird, der Kolben in eine erste Richtung bewegt wird, die fünfte Ventilöffnungsverbindung mit einer zweiten, entgegengesetzten Seite des Kolbens verbunden wird, so dass, wenn Druckluft an die zweite Seite angelegt wird, der Kolben zur Bewegung in einer zweiten Richtung veranlasst wird, die der ersten Richtung entgegengesetzt ist, und die sechste Ventilöffnungsverbindung (26)I mit der Atmosphäre verbunden ist.

## Revendications

1. Soupape de contrôle (10 ; 10A) comportant un logement (12), une chambre (14) ménagée dans le logement, une tige de soupape (30 ; 30A) dans la chambre, un piston (38 ; 90) qui est fixé à la tige de soupape, des premier et deuxième éléments de soupape (32 ; 34 ; 32A, 34A) lesquels sont espacés l'un de l'autre et qui sont montés de façon coulissante sur la tige de soupape et qui sont aptes à être solidarisés de façon étanche avec les premier et deuxième sièges de soupape respectivement (53, 55 ; 53A, 55A), un élément de sollicitation (50) qui agit entre les premier et deuxième éléments de soupape et qui a tendance à solliciter les premier et deuxième éléments de soupape pour les éloigner l'un de l'autre, un troisième élément de soupape (36 ; 36A) lequel est fixé sur la tige de soupape et qui est positionné entre les troisième et quatrième sièges de soupape (72, 76 ; 72A, 76A), des premier, deuxième, troisième, quatrième, cinquième, sixième et septième raccords d'orifice (16, 18, 20, 22, 24, 26, 28) sur le logement, le quatrième raccord d'orifice (22) étant raccordé, en utilisation, à une source de fluide pressurisé afin d'introduire le fluide pressurisé dans un premier volume (P) de la chambre qui est au moins partiellement limité par les premier et deuxième éléments de soupape, les premier (16) et deuxième (18) raccords d'orifice étant raccordés à la source de fluide pressurisé pour introduire, de façon contrôlée, du fluide pressurisé dans les deuxième et troisième volumes (Q, R) à l'intérieur de la chambre sur des côtés opposés respectifs du piston, et cas dans lequel le troisième volume (R) est pressurisé, le piston (38 ; 90), la tige de soupape (30 ; 30A) et le troisième élément de soupape (36 ; 36A) étant déplacés suivant un premier sens à l'intérieur de la chambre et le premier élément de soupape (32 ; 32A) est désolidarisé de façon étanche du premier siège de soupape (53 ; 53A) pour permettre au fluide pressurisé en provenance du quatrième raccord d'orifice (22) de s'écouler vers le troisième raccord d'orifice (20) et pour permettre au fluide pressurisé en provenance du cinquième raccord d'orifice de s'écouler vers le sixième raccord d'orifice lequel est raccordé à son tour à l'atmosphère, le deuxième élément de soupape (34 ; 34A) reste solidarisé de façon étanche avec le deuxième siège de soupape (55 ; 55A) ce qui permet par conséquent d'étanchéifier le quatrième raccord d'orifice (22) par rapport au cinquième raccord d'orifice (24) et, lorsque le deuxième volume (Q) est pressurisé, le piston (38 ; 90), la tige de soupape (30 ; 30A) et le troisième élément de soupape (36 ; 36A) sont déplacés suivant un deuxième sens à l'intérieur de la chambre (14), ce sens étant opposé au premier sens, et le premier élément de soupape (32 ; 32A) est re-solidarisé de façon étanche avec le premier siège de soupape (53 ; 53A) ce qui permet par conséquent d'étanchéifier le troisième raccord d'orifice (20) par rapport au quatrième raccord d'orifice (22), le deuxième élément de soupape (34 ; 34A) est désolidarisé de façon étanche du deuxième siège de soupape (55 ; 55A) pour permettre par conséquent au fluide pressurisé en provenance du premier raccord d'orifice de s'écouler vers le cinquième raccord d'orifice, le troisième élément de soupape (36 ; 36A) est re-solidarisé de façon étanche avec le quatrième siège de soupape (76 ; 76A) ce qui permet par conséquent d'étanchéifier le cinquième raccord d'orifice par rapport au sixième raccord d'orifice (26) et le troisième élément de soupape (36 ; 36A) est désolidarisé de façon étanche du troisième siège de soupape (72 ; 72A) ce qui permet par conséquent de raccorder le septième orifice, lequel est relié au troisième orifice, au sixième orifice et de là à l'atmosphère.

2. Agencement de pompage comportant un cylindre (A), un piston de va-et-vient (B) à l'intérieur du cylindre, une soupape de contrôle (10 ; 10A) selon la revendication 1, et une source d'air comprimé qui est raccordée au premier raccord d'orifice (16) et au quatrième raccord d'orifice (22), cas dans lequel le troisième raccord d'orifice (20) et le septième raccord d'orifice (28) sont raccordés à un premier côté du piston de sorte que, lorsque l'air pressurisé en provenance de la source est appliqué au premier côté, le piston va se déplacer suivant un premier sens, le cinquième raccord d'orifice (24) est raccordé à un second côté du piston, qui est le côté opposé, de sorte que, lorsque l'air pressurisé est appliqué au second côté le piston sera obligé de se déplacer suivant un deuxième sens qui est opposé au premier sens, et le sixième raccord d'orifice (26) est raccordé à l'atmosphère.
